(19) Europäisches Patentamt

European Patent Office

Office européen des brevets

(11) **EP 4 379 661 B1**

(12) **EUROPEAN PATENT SPECIFICATION**

(45) Date of publication and mention
of the grant of the patent:
**12.03.2025 Bulletin 2025/11**

(21) Application number: **22210572.8**

(22) Date of filing: **30.11.2022**

(51) International Patent Classification (IPC):
**G06T 7/521** *(2017.01)*

(52) Cooperative Patent Classification (CPC):
**G06T 7/521;** G06T 2207/20084

(54) **A METHOD FOR DYNAMIC 3D SCANNING OF A SPATIAL OBJECT AND A DYNAMIC 3D SCANNER**

VERFAHREN ZUR DYNAMISCHEN 3D-ABTASTUNG EINES RÄUMLICHEN OBJEKTS UND DYNAMISCHER 3D-SCANNER

PROCÉDÉ DE BALAYAGE 3D DYNAMIQUE D'UN OBJET SPATIAL ET SCANNER 3D DYNAMIQUE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(43) Date of publication of application:
**05.06.2024 Bulletin 2024/23**

(73) Proprietors:
• **Piechocki, Piotr**
**61-312 Poznan (PL)**
• **Wozniak, Pawel**
**62-110 Damaslawek (PL)**
• **Wozniak, Wieslaw**
**62-110 Damaslawek (PL)**

(72) Inventors:
• **Piechocki, Piotr**
**61-312 Poznan (PL)**
• **Wozniak, Pawel**
**62-110 Damaslawek (PL)**
• **Wozniak, Wieslaw**
**62-110 Damaslawek (PL)**
• **Giza, Piotr**
**61-142 Poznan (PL)**
• **Ostrowski, Marcin**
**62-270 Klecko (PL)**

(74) Representative: **Wroblewski, Marcin Jan**
**Fert, Jakubiak vel Wojtczak**
**Wróblewski rzecznicy patentowi**
**Sp. P. / ul. Gdanska 126/A103**
**90-520 Lodz (PL)**

(56) References cited:
• **MARUYAMA MICHIKA ET AL: "Multi-pattern Embedded Phase Shifting Using a High-Speed Projector for Fast and Accurate Dynamic 3D Measurement", 2018 IEEE WINTER CONFERENCE ON APPLICATIONS OF COMPUTER VISION (WACV), IEEE, 12 March 2018 (2018-03-12), pages 921 - 929, XP033337711, DOI: 10.1109/WACV.2018.00106**
• **LI WENJIAN ET AL: "Absolute phase retrieval for a single-shot fringe projection profilometry based on deep learning", OPTICAL ENGINEERING, SOC. OF PHOTO-OPTICAL INSTRUMENTATION ENGINEERS, BELLINGHAM, vol. 60, no. 6, June 2021 (2021-06-01), pages 64104, XP060143581, ISSN: 0091-3286, [retrieved on 20210618], DOI: 10.1117/1.OE.60.6.064104**
• **BUDIANTO ET AL: "Deep Learning Based Period Order Detection in Structured Light Three-Dimensional Scanning", 2019 IEEE INTERNATIONAL SYMPOSIUM ON CIRCUITS AND SYSTEMS (ISCAS), IEEE, 26 May 2019 (2019-05-26), pages 1 - 5, XP033573826, ISSN: 2158-1525, ISBN: 978-1-7281-3320-1, [retrieved on 20190429], DOI: 10.1109/ISCAS.2019.8701883**
• **CHRISTIAN BRÄUER-BURCHARDT ET AL: "Combination of Sinusoidal and Single Binary Pattern Projection for Fast 3D Surface Reconstruction", 28 August 2012, PATTERN RECOGNITION JOINT 34TH DAGM AND 36TH OAGM SYMPOSIUM GRAZ, AUSTRIA, AUGUST 28-31, 2012 PROCEEDINGS, SPRINGER BERLIN HEIDELBERG, DE, PAGE(S) 276 - 286, ISBN: 978-3-642-32716-2, XP047013795**

EP 4 379 661 B1

**Description**

*Technical field*

The present invention relates to a method for dynamic 3D scanning of a spatial object and a dynamic 3D scanner.

*Background of the invention*

From Chinese patent CN111383234B there is known an online dense 3D reconstruction method based on machine learning that uses structured light. Said method comprises the steps of calibrating parameters of camera-projector system; acquiring an image using a projector to project coded structured light onto a surface of an object to be measured and using a camera to collect a structured light image modulated by the surface of the object; removing noise in the collected image to improve image quality; recognizing color using a neural network model; filtrating images based on recognition of light bar parameters; detecting a light bar center line and determining a corresponding index of the light bar center line in a light bar sequence; structured light decoding according to the brightness of each pixel point and the light bar index to obtain a phase corresponding to the images acquired by the camera and acquiring a set of corresponding points; based on a trigonometric intersection algorithm in photogrammetry, intersecting each group of matching point pairs in the set of corresponding point, and decomposing spatial three-dimensional coordinates of the matching point pairs, and then completing dense three-dimensional reconstruction of surfaces of the object. The object of the invention is to improve calculation efficiency and stability of said method comparing to the known solution.

From international PCT application WO2020102814A1 there are known a method for processing interferograms or deformed fringes and a device for performing optical system design. The method comprising obtaining an input phase image based on the interferograms or the deformed fringes, wherein each pixel of the input phase image is associated with a phase value and the deformed fringes are obtained by projecting a set of pre-deformed fringes on an object; segmenting the input phase image by classifying the input phase image into multiple regions based on the phase value and a location of each pixel; assigning an integer value to each of the multiple regions, wherein the integer value indicates that a corresponding region has a phase offset equal to a product of 2p and the integer value; and constructing an output phase image based on the phase value of each pixel and the phase offset of each of the multiple regions. The multiple regions and the integer value corresponding to each of the multiple regions are determined by a convolutional neural network. Furthermore, the input phase image is denoised by using a neural network that is trained using only noisy data. In turn, the device configured to perform the steps of said method.

Further, from international PCT application WO2020063013A1 there are known a fringe projection time phase unwrapping method based on deep learning. The method comprises the steps of projecting by a projector four sets of three-step phase-shifted patterns on a measured object, wherein frequencies of the four sets of the patterns are 1, 8, 32, and 64; acquiring a raster image to obtain a wrapped phase maps and calculating the wrapped phase maps of different frequencies; performing phase unwrapping on the wrapped phase maps to obtain a periodic level diagram and an absolute phase diagram of a phase with the frequency of 64; building a residual convolutional neural network, wherein the input data are the wrapped phase maps with the frequencies of 1 and 64 and the output data is the periodic level diagram of the phase with the frequency of 64; and finally a training set and a verification set are made to train and verify said network, wherein said network verifies the test set to output the periodic level diagram of the phase with the frequency of 64. As a result, the method is adopted and the wrapped phase maps with the frequency of 1 are used for unwrapping the wrapped phase maps with the frequency of 64. The purpose of the aforementioned solution is to provide a method for time-phase extension of fringe projection based on deep learning, while providing a highly accurate three-dimensional measurement without increasing the number of projection patterns.

Chinese patent application CN111523618A discloses a phase unwrapping method based on deep learning comprising the steps of providing fringe-encoded images by a projector; collecting the fringe-encoded images by a camera; obtaining a wrapped phase information of the fringe-encoded images by means of three-step phase algorithm, and adding Gaussian noise and random noise to it to generate a training data set; generating the training data set and building a fully connected neural network, wherein each layer of the fully connected neural network uses only one node such that the number of nodes is increased layer by layer and at the end of the network, the number of network nodes is decreased layer by layer; inputting corresponding pixel values into two wrapped phase images one by one to obtain a fringe level of the entire image, and then obtaining the absolute phase, wherein the absolute phase is described by the equation:

$$\Phi(x,y) = \phi(x,y) + 2\pi k(x,y)$$

wherein

$\Phi(x,y)$ is the absolute phase,

$\Phi(x,y)$ is the wrapped phase

$k(x,y)$ is the fringe order.

From the article by Pengcheng Yao, Shaoyan Gai, Yuchong Chen, Wenlong Chen, Feipeng Da, "A multi-code 3D measurement technique based on deep learning", "Optics and Lasers in Engineering", Volume: 143, August 2021, 106623, there is known a multi-code deep learning method designed to obtain the high-slope absolute phase with high accuracy and robustness with usage of two patterns. Said method uses for this purpose two neural sub-networks. A convolutional neural network with adaptive linear (ALCNN) to obtain a wrapped phase from single cosine pattern and a multi-connected convolutional neural network (MCCNN) to obtain a fringe order from a multi-code pattern, wherein the fringe order is required to recover the absolute phase by unwrapping $2\pi$ discontinuities. The multi-code pattern is expressed as follows:

$$M_c(x, y) = a(x, y) + b(x, y) \cos \left(1 - \frac{2xC_s(x, y)}{6} + \frac{1}{6}\right)$$

where:
$C_s(x,y)$ is a coding scheme of the multi-code pattern.

The MCCNN network has functions of segmentation and recognition. The segmentation function is used to split codes located in different periods and extract coding scheme from the multi-code pattern. Then the fringe order is recognized from the coding scheme by the help of the recognition function and the feature of 3-connected-codes.

The article "Multi-pattern Embedded Phase Shifting Using a High-Speed Projector for Fast and Accurate Dynamic 3D Measurement", by Michika Maruyama et al, in 2018 IEEE Winter Conference on Applications of Computer Vision (WACV), proposes a high-speed 3D measurement system using a projector capable of projecting 8-bit tone images at 1000fps and embedding sinusoidal and Gray-code patterns in a single image to minimize projection time. The system employs two cameras aligned with a half mirror to capture these patterns separately and robustly, enabling high-speed phase-shifting measurements for accurate 3D reconstruction of moving objects.

Although the above-cited literature discloses variety of proposals for dynamic 3D scanning there is still a need to provide a method for dynamic 3D scanning of a spatial object allowing to reduce the number of sinusoidal frames required to generate a wrapped phase map.

### The Essence of the Invention

The object of the invention is a method for dynamic 3D scanning of a spatial object comprising the following steps:

- projecting a sinusoidal fringe pattern onto a spatial object by a projector of a dynamic 3D scanner,

- capturing by at least one camera of the dynamic 3D scanner at least one sinusoidal frame of the spatial object with the sinusoidal fringe pattern on its surface,

- projecting a coding fringe pattern onto the spatial object by the projector of the dynamic 3D scanner,

- capturing by at least one camera of the dynamic 3D scanner at least one coding frame of the spatial object with the coding fringe pattern on its surface,

- generating a sequence of de-noised sinusoidal frames with phase shift, based on the at least one captured sinusoidal frame;

- generating a wrapped phase map from the sequence of the sinusoidal frames with phase shift,

- correlating the wrapped phase map with the coding frame to obtain a pixel map with data comprising assigned period number and a map of probability values of assigning period numbers,

- filtering out from the pixel map with data comprising assigned period number areas having on the map of probability values of assigning the period numbers a value $\leq 0.99$,

- reconstructing the filtered out areas from the pixel map,

- generating an unwrapped phase map from the wrapped phase map and the pixel map with reconstructed filtered out areas,

- reconstructing a 3D image of the spatial object based on the unwrapped phase map, wherein

- the coding fringe pattern comprises strips and the coding fringe pattern is arranged such that

  - the pixel width/height of the strips is equal to an oscillation period of a sinusoidal waveform of the sinusoidal frame,

  - every second strip comprises a fringe unit pattern,

  - each of the fringe unit patterns constitutes an area comprising at most the number of pixels corresponding to the number of pixels determining the pixel width/height of the strips,

  - each of the compositional fringe patterns occurs maximum of two times in the coding fringe pattern,

  - each of the fringe unit pattern comprises at least one of three component RGB channels, wherein the brightness level of each of the component RGB channel is the same and is selected from 0%, 50%, 100%;

  and wherein

- the sequence of de-noised sinusoidal frames with phase shift comprises a set of four de-noised frames comprising a sine signal, cosine signal, $\pi$-shifted sine signal, $\pi$-shifted cosine signal.

The application of the sequence of the de-noised sinusoidal frames with phase shift, and therefore the hypercomplex planes, ensures higher accuracy and higher possibility of error determining in the wrapped phase map generation comparing to the solutions known from the prior art. It is possible due to the fact that with the hypercomplex planes, it is possible to determine the degree of certainty of predictions based on the consistency of the individual elements present in the sinusoidal frame.

The application of said coding fringe pattern allows acquisition of data on the geometry of the spatial object in motion relative to the dynamic 3D scanner and/or the spatial object with a shape that varies over time.

In turn, the application of the disclosed sequence of the de-noised sinusoidal frames with phase shift and the disclosed coding fringe pattern, in a combination, provides a method for dynamic 3D scanning of a spatial object allowing to reduce the number of sinusoidal frames required to generate a wrapped phase map.

Preferably, when reconstructing of the 3D image of the spatial object a coordinate value x of each reconstructed pixel is determined from the unwrapped phase map according to formula

$$x(\varphi) = \frac{p\varphi}{2\pi}$$

where

$\varphi$ - an angular value of each reconstructed pixel,

$p$ - an oscillation period expressed in pixels,

in order to obtain a map of pixel coordinates, wherein the 3D coordinates of the spatial objects are determined by compiling the unwrapped phase map with the map of pixel coordinates and taking into consideration relative location of at least one camera and the projector.

Preferably, after the step of capturing by at least one camera of the dynamic 3D scanner at least one coding frame of the spatial object with the coding fringe pattern on its surface and before the step of generating the sequence of the de-noised sinusoidal frames with phase shift, based on at least one captured sinusoidal frame, the captured sinusoidal frame is divided into square fragments, and the generation of the sequence of the de-noised sinusoidal frames with phase shift, based on at least one captured sinusoidal frame is performed by

- generating for each of said square fragments a sequence of de-noised sinusoidal square fragments with phase shift,

- cutting out overlapping edges of the de-noised sinusoidal square fragments with phase shift of said sequence,

- assembling of the de-noised sinusoidal square fragments with phase shift into the de-noised sinusoidal frame with phase shift.

The application of the steps of division of the captured sinusoidal frame into square fragments, generation of the sequence of the de-noised sinusoidal frames with phase shift, based on at the captured sinusoidal frame, cutting out overlapping edges of the de-noised sinusoidal square fragments with phase shift of said sequence and assembling of the de-noised sinusoidal square fragments with phase shift into the de-noised sinusoidal frames with phase shift as disclosed allows to obtain a higher maximum resulting resolution with the usage of the same computing memory resource as in the solutions known from the prior art.

Preferably, after the step of generating the wrapped phase map from the sequence of the de-noised sinusoidal frames with phase shift and before the step of correlating the wrapped phase map with the coding frame,

- the spatial object in the wrapped phase map is divided into longitudinal fragments,

- the spatial object in the coding frame is divided into longitudinal fragments, and
after obtaining the pixel map with data comprising assigned period numbers and the map of probability values of assigning period numbers in a form of the longitudinal fragments,

- overlapping edges of the longitudinal fragments of the pixel map with data comprising assigned period numbers are cut off,

- overlapping edges of the longitudinal fragments of the map of probability values of assigning period numbers are cut off,

- the longitudinal fragments of the pixel map with data comprising assigned period numbers with the cut out overlapping edges are assembled into the pixel map with data comprising assigned period numbers, and

- the longitudinal fragments of the map of probability values of assigning period numbers with the cut out overlapping edges are assembled into the map of probability values of assigning period numbers.

The application of the steps of division of the spatial object in the wrapped phase map and in the coding frame into longitudinal fragments, cutting out overlapping edges of the pixel map with data comprising assigned period numbers and cutting out overlapping edges of the map of probability values of assigning period numbers obtained in a form of the longitudinal fragments, and assembling the pixel map with data comprising assigned period numbers from the longitudinal fragments with the cut out overlapping edges as well as assembling the map of probability values of assigning period numbers from the longitudinal fragments with the cut out overlapping edges allows to obtain even higher maximum resulting resolution, even up to 10 times, with the usage of the same computing memory resource as in the solutions known from the prior art.

Preferably, wherein the step of filtering out from the pixel map with data comprising assigned period number areas having on the map of probability values of assigning the period numbers is performed for a value <= 0.95.

Preferably, the step of filtering out from the pixel map with data comprising assigned period number areas having on the map of probability values of assigning the period numbers is performed for a value <= 0.90.

Preferably, before generation of the wrapped phase map from the sequence of the de-noised sinusoidal frames with phase shift, shadows are filtered out from said sequence.

The filtering out shadows from said sequence ensures acceleration of the wrapped phase generation.

Preferably, the strips comprising the same fringe unit patterns adjacent to each other.

Preferably, the coding fringe pattern is a one-dimensional pattern.

Preferably, the coding fringe pattern is a two-dimensional pattern.

The application of said two-dimensional pattern ensures that the coding frame captured by at least one camera of the dynamic 3D scanner has a sufficient resolution to perform the method according to the invention even when sharpness of the coding fringe pattern projected by the projector of the dynamic 3D scanner decreases.

Preferably, the wrapped phase map generation is done by a first convolutional neural network.

Preferably, the pixel map obtaining is done by a second convolutional neural network.

The object of the invention is also a dynamic 3D scanner comprising a projector for projecting a sinusoidal fringe pattern and projecting a coding fringe pattern onto a spatial object, at least one camera for capturing at least one sinusoidal frame of the spatial object with the sinusoidal fringe pattern on its surface and for capturing at least one coding frame of the spatial object with the coding fringe pattern on its surface, wherein the at least one camera is pointed at a non-zero angle to a display direction of the projector, the dynamic 3D scanner further comprising a processing unit, and wherein the processing unit is configured to performed the steps of the method according to the invention.

The invention also relates to a computer program comprising means of the program code for performing all steps of the method according to the invention, when said program is running on the dynamic 3D scanner according to the invention.

Furthermore, the invention relates to a computer-readable medium storing computer-implemented instructions for performing all the steps of the method according to the invention implemented on the dynamic 3D scanner according to the invention.

## *Advantages of the invention*

The method according to the invention ensures reduction of computation time required to reconstruct geometry of a spatial object while maintaining high accuracy of said reconstruction.

The method according to the invention ensures extraction of a 3D model of a spatial object from a sinusoidal frame indicated by a user.

The method according to the invention ensures reduction of manufacturing costs of a dynamic 3D scanner and use of hardware components such as a projector and camera with standard parameters.

The method according to the invention ensures improvement of scanning by using convolutional neural networks.

The method according to the invention ensures increased robustness of a dynamic 3D scanner to the noise present in the input data, and as a result reconstruction of geometry of a spatial object with a higher accuracy.

## *Description of the drawings*

The subject of the invention is shown in the embodiments in a drawing, in which:

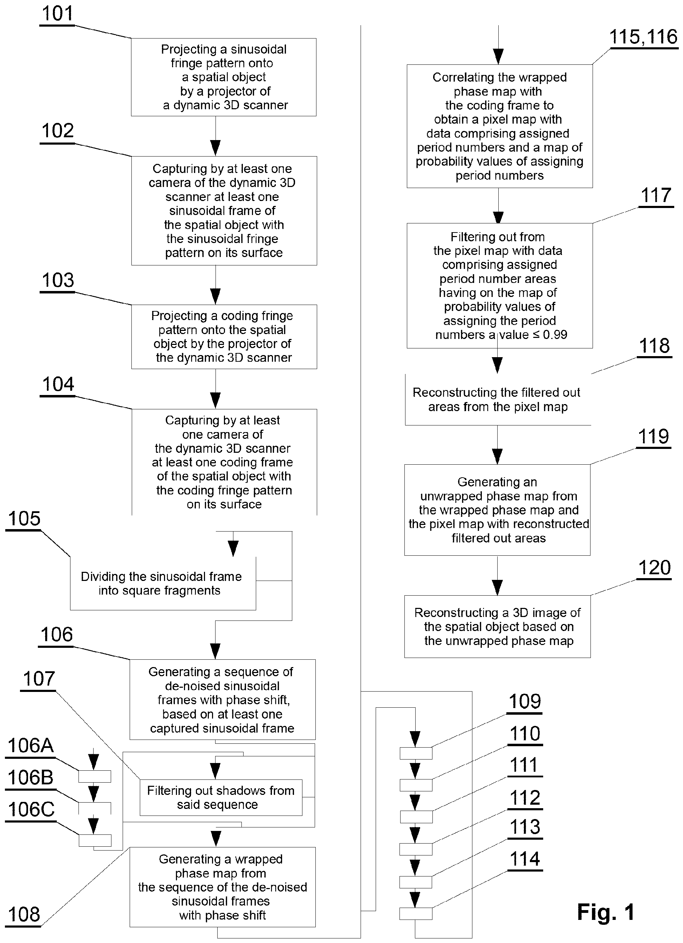

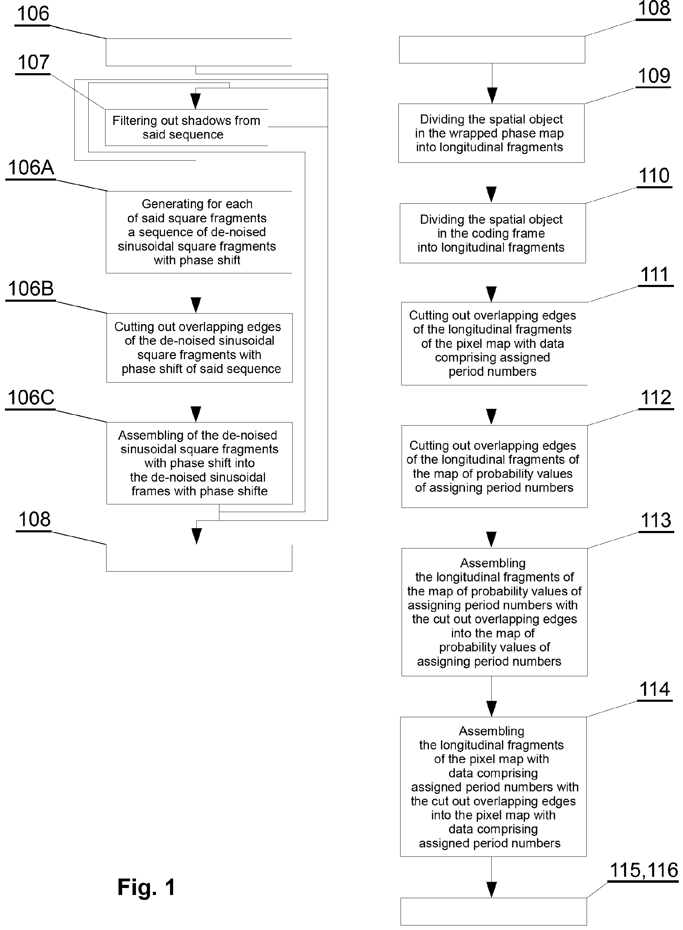

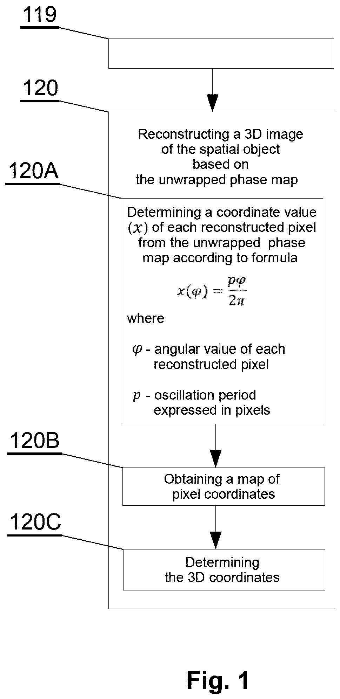

Fig. 1    presents a flowchart of a method for dynamic 3D scanning of a spatial object according to the invention;

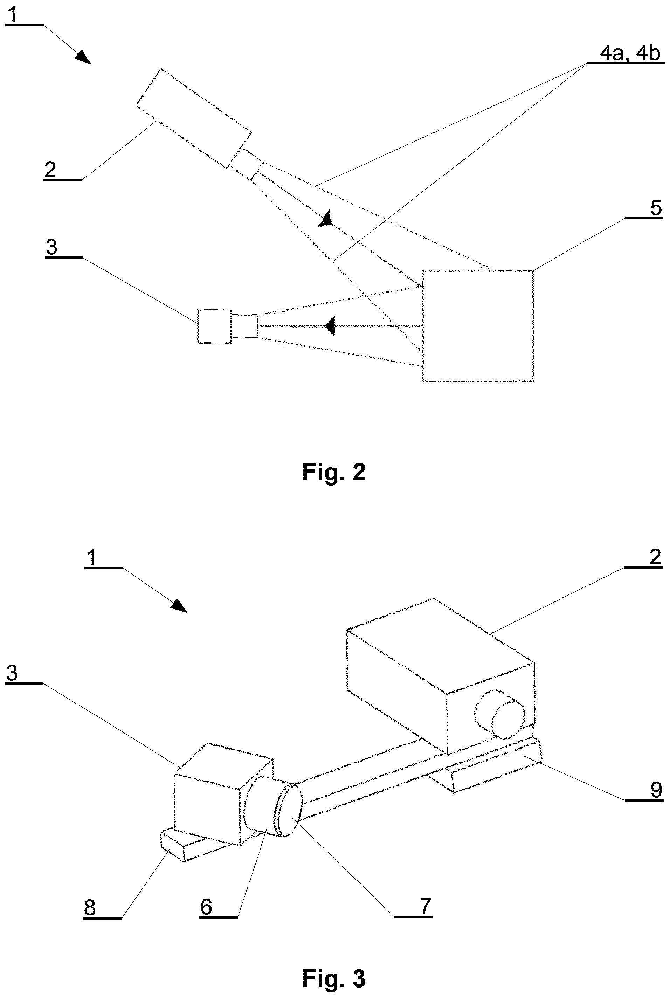

Fig. 2    presents an operational scheme of a dynamic 3D scanner according to the invention;

Fig. 3    presents schematically a dynamic 3D scanner according to the first embodiment of the invention;

Fig. 4    presents an example of sinusoidal fringe pattern for use in a method for dynamic 3D scanning of a spatial object according to the invention;

Fig. 5A    presents an example of a sinusoidal frame of a spatial object with a sinusoidal fringe pattern on its surface;

Fig. 5B    presents an example of a sequence of de-noised sinusoidal frames with phase shift, based on the sinusoidal frame from Fig. 5A;

Fig. 6,7    present examples of an unwrapped phase map generated in a method for dynamic 3D scanning of a spatial object according to the invention;

Fig. 8    presents an exemplary one-dimensional coding fringe pattern for use in a method for dynamic 3D scanning of a spatial object according to the invention;

Fig. 9    presents a zoomed-in exemplary one-dimensional coding fringe pattern used in a method for dynamic 3D scanning of a spatial object according to the invention;

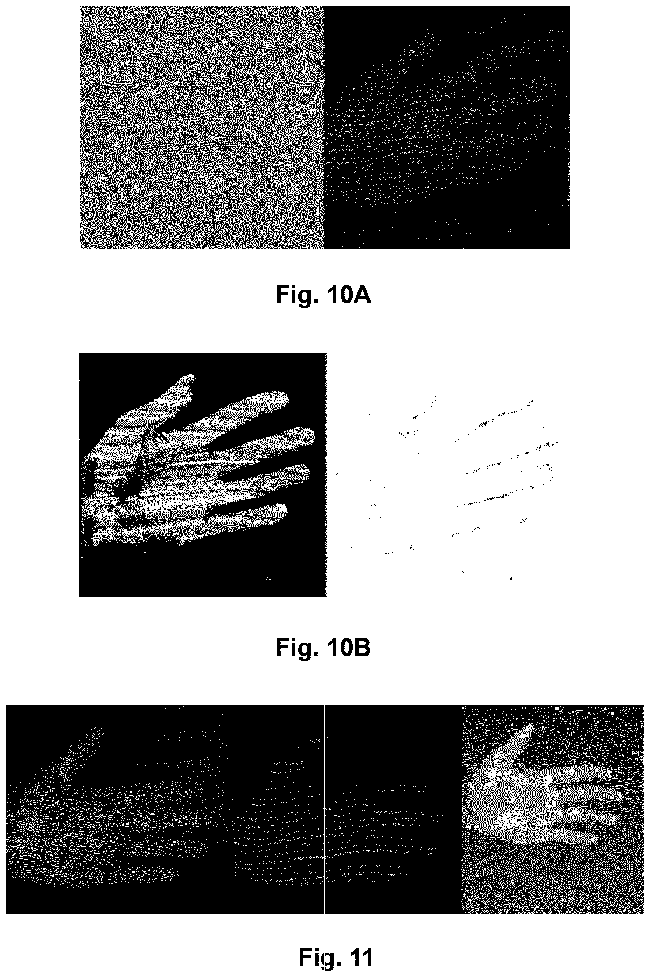

Fig. 10A    presents an example of a set of a wrapped phase map and a coding frame;

Fig. 10B    presents an example of a set of a pixel map with data comprising assigned period number and a map of probability values of assigning period numbers;

Fig. 11    presents an example of a set of a sinusoidal frame, a coding frame and a 3D geometry of a spatial object obtained based on said frames;

Fig. 12    presents an exemplary two-dimensional coding pattern used in a method for dynamic 3D scanning of a spatial object according to the invention;

Fig. 13    presents a zoomed-in exemplary two-dimensional coding pattern for use in a method for dynamic 3D scanning of a spatial object according to the invention;

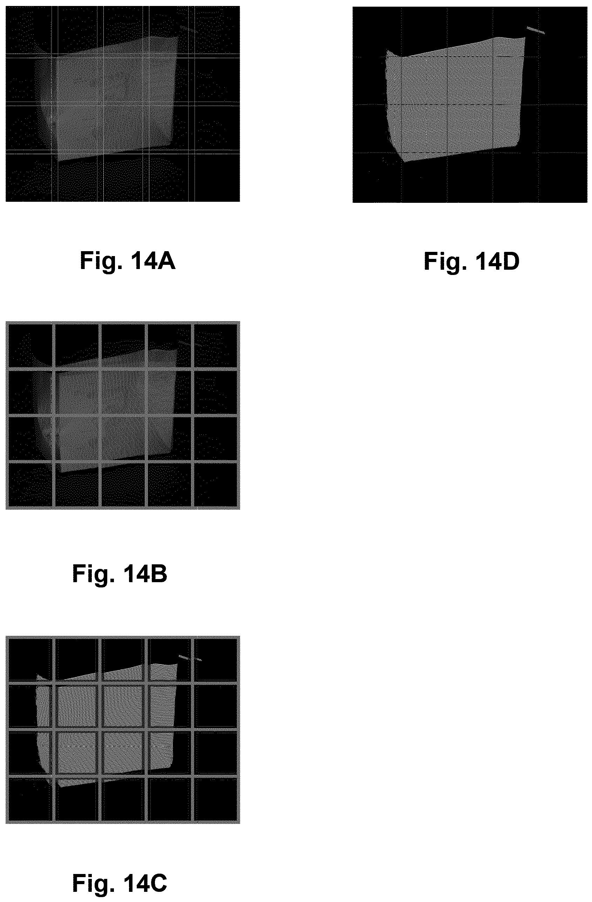

Fig. 14A    presents an example of a captured sinusoidal frame with indicated overlapping edges;

Fig. 14B    presents an example of a captured sinusoidal frame divided into square fragments;

Fig. 14C    presents an example of a denoised square fragments of the captured sinusoidal frame with cut out overlapping edges;

Fig. 14D    presents an example of an assembled de-noised sinusoidal frame with phase shift;

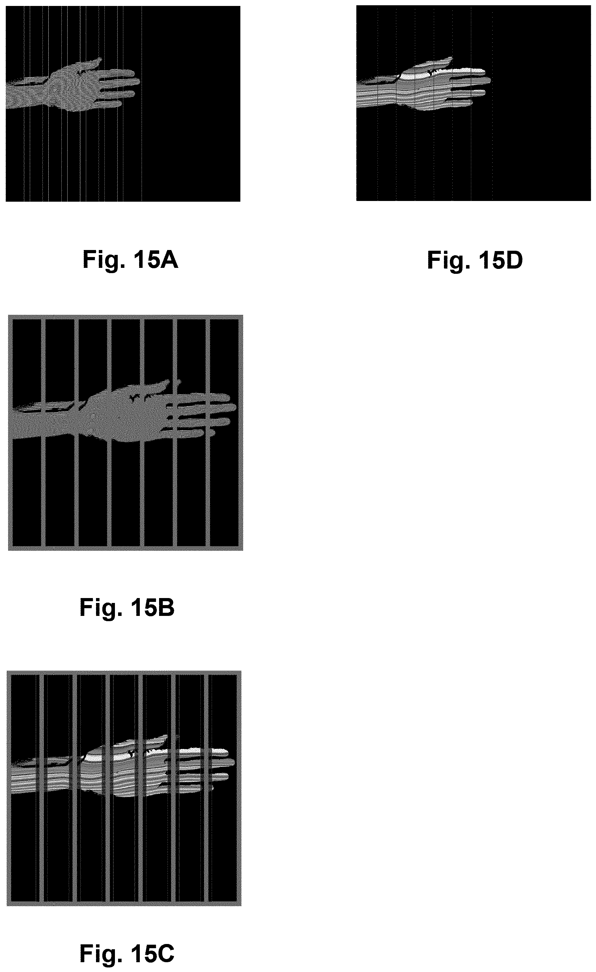

Fig. 15A    presents an example of a spatial object in a wrapped phase map with indicated overlapping edges;

Fig. 15B    presents an example of a spatial object in a wrapped phase map divided into longitudinal fragments;

Fig. 15C    presents an example of a pixel map with data comprising assigned period numbers with cut out overlapping edges;

Fig. 15D    presents an example of an assembled a pixel map with data comprising assigned period numbers.

## *Detailed description of the invention*

### *The first embodiment of the invention*

### A method for dynamic 3D scanning of a spatial object

In a method for dynamic 3D scanning of a spatial object according to the first embodiment of the invention a sinusoidal fringe pattern 4a is projected 101 onto a spatial object 5, for example a hand, by a projector 2 of a dynamic 3D scanner 1 and a sinusoidal frame of the spatial object 5 with the sinusoidal fringe pattern 4a on its surface is captured 102 by a camera 3 of the dynamic 3D scanner 1. Next a coding fringe pattern 4b is projected 103 onto the spatial object 5 by the projector 2 of the dynamic 3D scanner 1. Said coding fringe pattern 4b is a one-dimensional pattern. Further, the coding frame of the spatial object 5 with the coding fringe pattern 4b on its surface is captured 104 by the camera 3 of the dynamic 3D scanner 1. Said steps of projecting 101, 103 are performed using structured light. In the other embodiments said steps of projecting 101, 103 can be performed using halogen lighting, infrared light lasers, red lasers, blue lasers or LEDs.

Furthermore, said coding fringe pattern 4b comprises strips and the coding fringe pattern 4b is arranged such that:

- the pixel width/height of the strips is equal to an oscillation period of a sinusoidal waveform of the sinusoidal frame,

- every second strip comprises a fringe unit pattern,

- each of the fringe unit patterns constitutes an area comprising at most the number of pixels corresponding to the number of pixels determining the pixel width/height of the strips,

- each of the fringe unit patterns occurs maximum of two times in the coding fringe pattern,

- each of the fringe unit pattern comprises at least one of three component RGB channels, wherein the brightness level of each of the component RGB channel is the same and is selected from 0%, 50%, 100%.

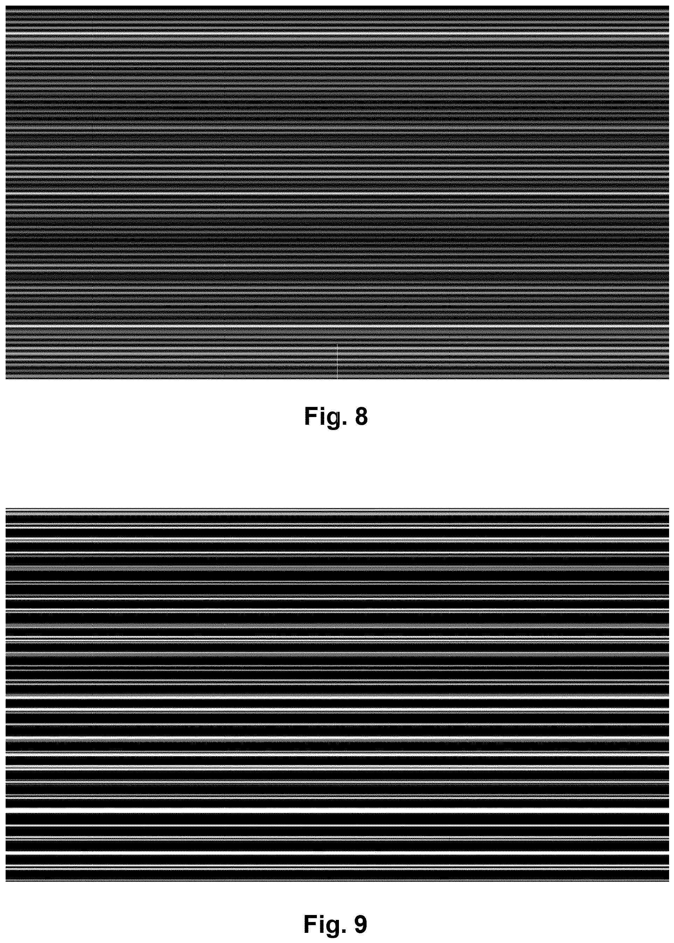

An exemplary one-dimensional coding fringe pattern (Fig. 8, Fig. 9) is arranged such that:

- with an oscillation period of 8 pixels, strips of said coding fringe pattern have width/height of 8 pixels, wherein every second strip comprises a fringe unit pattern;

- each of the fringe unit patterns constitutes an area comprising at most 8 pixels,

- each of the fringe unit patterns occurs maximum of two times in the coding fringe pattern,

- each of the fringe unit pattern comprises three component RGB channels, wherein the brightness level of each of the component RGB channel is the same and is selected from 0%, 50%, 100%.

In the other embodiments of the invention the strips of said coding fringe pattern 4b can comprise the same fringe unit patterns adjacent to each other.

The application of said coding fringe pattern 4b allows acquisition of data on the geometry of the spatial object 5 in motion relative to the dynamic 3D scanner and/or the spatial object 5 with a shape that varies over time.

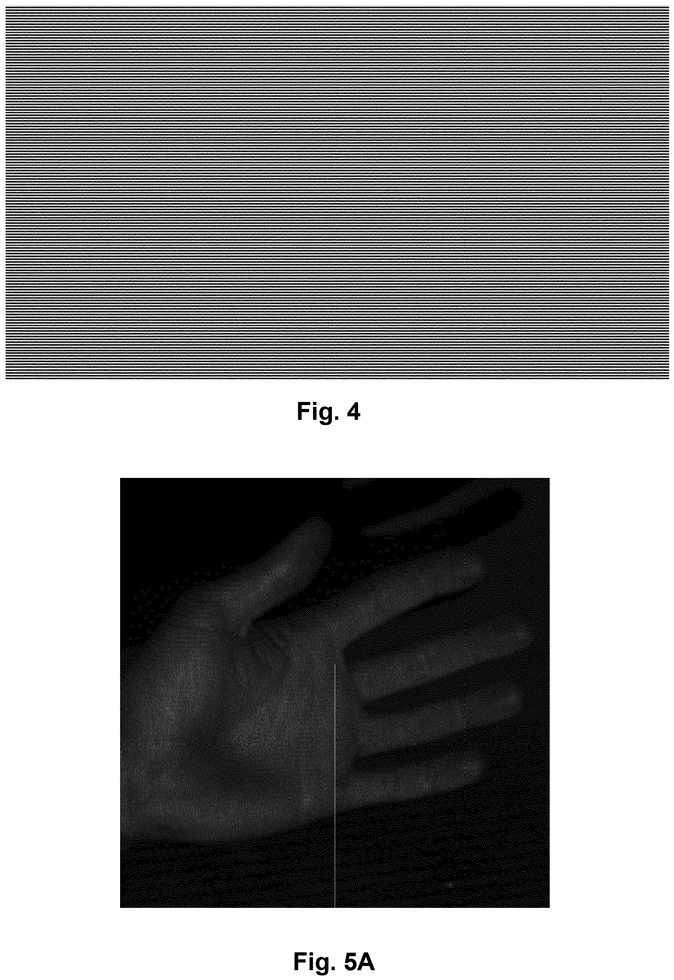

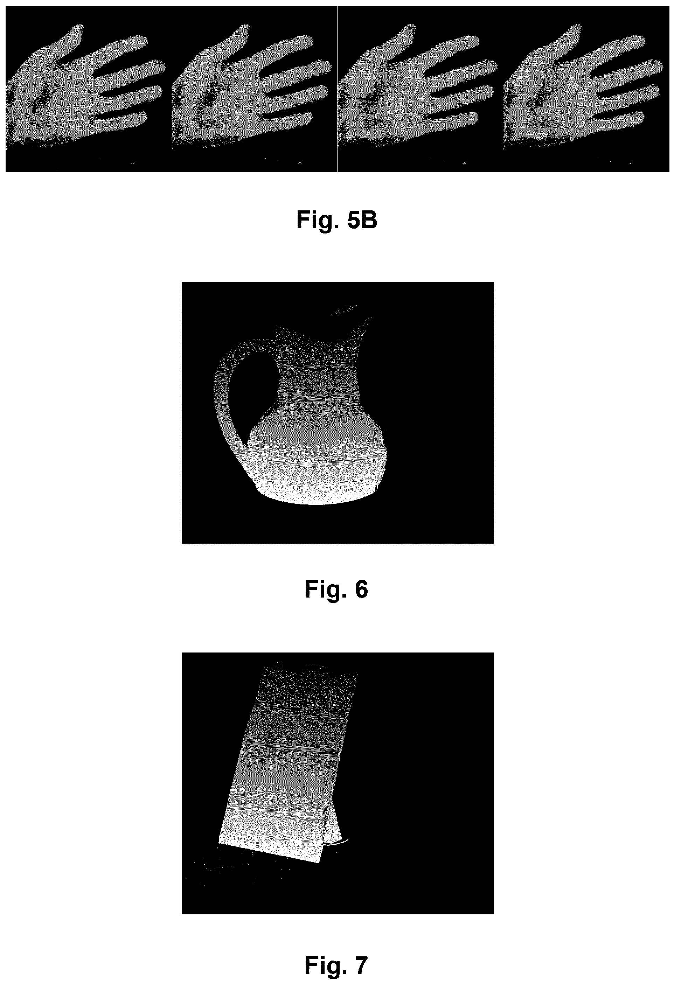

In the next step a sequence of de-noised sinusoidal frames with phase shift (Fig 5B) is generated 106, based on the captured 102 sinusoidal frame (Fig. 5A). The sequence of de-noised sinusoidal frames with phase shift comprises a set of four de-noised frames comprising a sine signal, cosine signal, π-shifted sine signal, π-shifted cosine signal. Said de-noised frames form hypercomplex planes.

After said step shadows present in the sequence of the de-noised sinusoidal frames with phase shift are filtered out 107. Next a wrapped phase map from the sequence of the de-noised sinusoidal frames with phase shift is generated 108, wherein the wrapped phase map generation 108 is done by a first convolutional neural network. Input data of the first convolutional neural network constitutes the sinusoidal frame captured 102 by the camera 3 of the dynamic 3D scanner 1. Output data of the first convolutional neural network constitutes the sequence of de-noised sinusoidal frames with phase shift.

The application of the sequence of the de-noised sinusoidal frames with phase shift, and therefore the hypercomplex planes, ensures higher accuracy and higher possibility of error determining in the wrapped phase map generation 108 comparing to the solutions known from the prior art. It is possible due to the fact that with the hypercomplex planes, it is possible to determine the degree of certainty of predictions based on the consistency of the individual elements present in the sinusoidal frame. In turn, the disclosed step of filtering out 107 of the shadows from said sequence ensures acceleration of the wrapped phase map generation 108.

The application of the disclosed sequence of de-noised sinusoidal frames with phase shift and the disclosed coding fringe pattern 4b, in a combination, provides a method for dynamic 3D scanning of a spatial object allowing to reduce the number of sinusoidal frames required to generate a wrapped phase map.

In the following step the wrapped phase map is correlated 115 with the coding frame to obtain 116 a pixel map with data comprising assigned period numbers as well as a map of probability values of assigning period numbers. The pixel map with data comprising assigned period numbers and the map of probability values of assigning period numbers obtaining 116 is done by a second convolutional neural network. Input data of the second convolutional neural network constitute the wrapped phase map and the coding frame. Output data of the second convolutional neural network constitute the pixel map with data comprising assigned period numbers and the map of probability values of assigning period numbers.

In the following step, areas having on the map of probability values of assigning the period numbers a value $\leq 0.99$ are filtered out 117 from the pixel map with data comprising assigned period number. Preferably, said value is <= 0.95 and more preferably said value is <= 0.90.

The filtered out areas from the pixel map are reconstructed 118 and an unwrapped phase map is generated 119 from the wrapped phase map and the pixel map with reconstructed 118 filtered out areas. Finally, a 3D image of the spatial object 5 is reconstructed 120. During said reconstruction 120 of the 3D image of the spatial object 5 a coordinate value x of each reconstructed pixel is determined 120A from the unwrapped phase map according to formula

$$x(\varphi) = \frac{p\varphi}{2\pi}$$

where

$\varphi$ - an angular value of each reconstructed pixel,

$p$ - an oscillation period expressed in pixels,

in order to obtain 120B a map of pixel coordinates.

The 3D coordinates of the spatial object 5 are determined 120C by compiling the unwrapped phase map with the map of pixel coordinates and taking into consideration relative location of the camera 3 and the projector 2.

## A dynamic 3D scanner

A dynamic 3D scanner 1 according to the first embodiment comprises a projector 2 for projecting 101 a sinusoidal fringe pattern 4a and projecting 103 a coding fringe pattern 4b onto a spatial object 5. The projector 2 uses structured light to project 101 the sinusoidal fringe pattern 4a and to project 103 the coding fringe pattern 4b as well. In the other embodiments the projector 2 can project 101, 103 said patterns 4a, 4b using halogen lighting, infrared light lasers, red lasers, blue lasers or LEDs. Further, the dynamic 3D scanner 1 comprises a camera 3 for capturing 102 a sinusoidal frame of the spatial object 5 with the sinusoidal fringe pattern 4a on its surface and for capturing 104 a coding frame of the spatial object 5 with the coding fringe pattern 4b on its surface. The camera 3 is equipped with lens 6 and a spectral filter 7, wherein said filter 7 is designed to allow light of a specific wavelength to be captured. Said camera 3 is pointed at a non-zero angle to a display direction of the projector 2. The projector 2 and the camera 3 are fixed to a support structure 8, wherein said support structure 8 allows adjustment of mutual position of the projector 2 and camera 3 and as a consequence ensures that the proper angles between them are maintained. Further, the projector 2 is connected with a stand 9. Further, the dynamic 3D scanner 1 comprises a processing unit and said processing unit is configured to perform the steps of the method according to the invention. The processing unit is an integral component of the dynamic 3D scanner. The dynamic 3D scanner 1 is designed to be powered by an external power supply. In the other embodiments the processing unit can constitute an external device, for example a desktop computer. In such cases the dynamic 3D scanner 1 is designed to be connected to an external processing unit.

## A computer program

A computer program comprising means of the program code for performing all steps of the method according to the invention, when said program is running on the dynamic 3D scanner according to the invention.
The computer program disclosed in the indicated embodiment provides a disclosure that is also inherent in the other embodiments.

## A computer-readable medium

A computer-readable medium storing computer-implemented instructions for performing all the steps of the method according to the invention implemented on the dynamic 3D scanner according to the invention.
The computer-readable medium disclosed in the indicated embodiment provides a disclosure that is also inherent in the other embodiments.

### *The second embodiment of the invention*

## A method for dynamic 3D scanning of a spatial object

The second embodiment of the method for dynamic 3D scanning of a spatial object as in the first embodiment, with the difference that after the step of capturing 104 by the camera 3 of the dynamic 3D scanner 1 the coding frame of the spatial object 5 with the coding fringe pattern 4b on its surface and before the step of generating 106 the sequence of the de-noised sinusoidal frames with phase shift, based on the captured 102 sinusoidal frame, the sinusoidal frame is divided 105 into square fragments, for example having a resolution of 256 pixels x 256 pixels, and the generation 106 of the sequence of the de-noised sinusoidal frames with phase shift, based on the captured 102 sinusoidal frame is performed by generating 106A for each of said square fragments a sequence of de-noised sinusoidal square fragments with phase shift, cutting out 106B overlapping edges of the de-noised sinusoidal square fragments with phase shift of said sequence and assembling 106C of the de-noised sinusoidal square fragments with phase shift into the de-noised sinusoidal frame with phase shift.
The application of the steps of division 105 of the captured 102 sinusoidal frame into square fragments, generation 106A of the sequence of the de-noised sinusoidal frames with phase shift, based on at the captured 102 sinusoidal frame, cutting out 106B overlapping edges of the de-noised sinusoidal square fragments with phase shift of said sequence and assembling 106C of the de-noised sinusoidal square fragments with phase shift into the de-noised sinusoidal frames with phase shift as disclosed allows to obtain a higher maximum resulting resolution with the usage of the same computing memory resource as in the solutions known from the prior art.
Furthermore, after the step of generating 108 the wrapped phase map from the sequence of the de-noised sinusoidal frames with phase shift and before the step of correlating 115 the wrapped phase map with the coding frame, the spatial object in the wrapped phase map is divided 109 into longitudinal fragments, the spatial object in the coding frame is divided 110 into longitudinal fragments, for example having a longitudinal resolution of 128 pixels. After obtaining 116 the pixel map with data comprising assigned period numbers and the map of probability values of assigning period numbers in a form of the longitudinal fragments, overlapping edges of the longitudinal fragments of the pixel map with data comprising assigned period numbers are cut out 111, overlapping edges of the longitudinal fragments of the map of probability values of assigning period numbers are cut out 112, the longitudinal fragments of the pixel map with data comprising assigned period numbers with the cut out overlapping edges are assembled 113 into the pixel map with data comprising assigned period numbers, and the longitudinal fragments of the map of probability values of assigning period numbers with the cut out overlapping edges are assembled 114 into the map of probability values of assigning period numbers.

The application of the steps of division 109, 110 of the spatial object in the wrapped phase map and in the coding frame into longitudinal fragments, cutting out 111 overlapping edges of the pixel map with data comprising assigned period numbers and cutting out 112 overlapping edges of the map of probability values of assigning period numbers obtained in a form of the longitudinal fragments, and assembling 113 the pixel map with data comprising assigned period numbers from the longitudinal fragments with the cut out overlapping edges as well as assembling 114 the map of probability values of assigning period numbers from the longitudinal fragments with the cut out overlapping edges allows to obtain even higher maximum resulting resolution, even up to 10 times, with the usage of the same computing memory resource as in the solutions known from the prior art.

### The third embodiment of the invention

### A method for dynamic 3D scanning of a spatial object

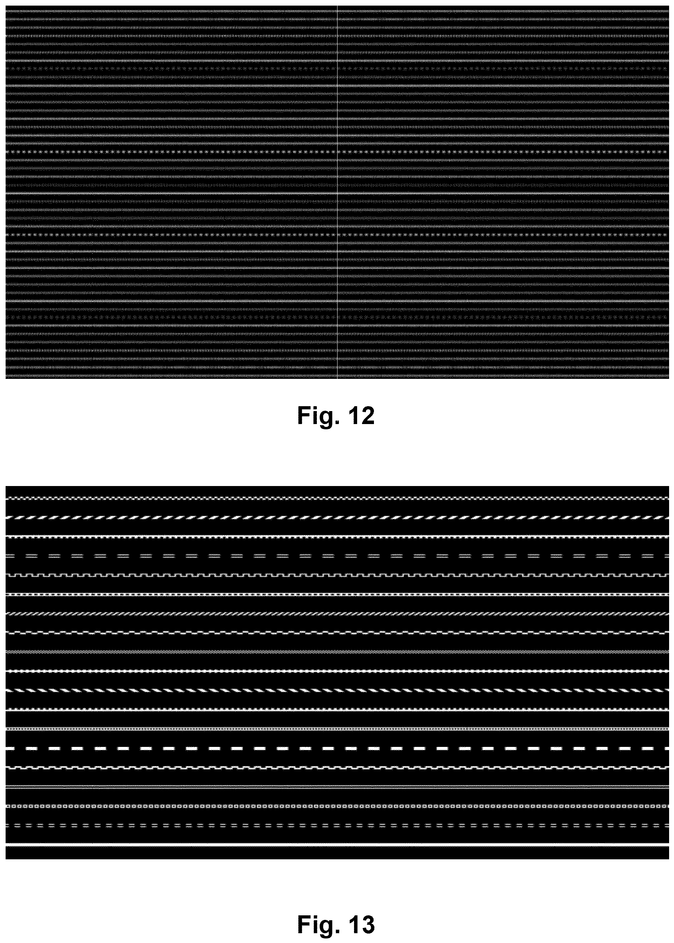

The third embodiment of the method for dynamic 3D scanning of a spatial object as in the first or the second embodiment, with the difference that the coding fringe pattern 4b is a two-dimensional pattern (Fig. 12, Fig. 13).

The application of said two-dimensional pattern 4b ensures that the coding frame captured by the camera 3 of the dynamic 3D scanner 1 has a sufficient resolution to performed the disclosed method even when sharpness of the coding fringe pattern 4b projected by the projector 2 of the dynamic 3D scanner decreases.

### Claims

1. A method for dynamic 3D scanning of a spatial object comprising the following steps:

- projecting (101) a sinusoidal fringe pattern (4a) onto a spatial object (5) by a projector (2) of a dynamic 3D scanner (1),
- capturing (102) by at least one camera (3) of the dynamic 3D scanner (1) at least one sinusoidal frame of the spatial object (5) with the sinusoidal fringe pattern (4a) on surface,
- projecting (103) a coding fringe pattern (4b) onto the spatial object (5) by the projector (2) of the dynamic 3D scanner (1),
- capturing (104) by at least one camera (3) of the dynamic 3D scanner (1) at least one coding frame of the spatial object (5) with the coding fringe pattern (4b) on its surface,
- generating (106) a sequence of de-noised sinusoidal frames with phase shift, based on at least one captured (102) sinusoidal frame;
- generating (108) a wrapped phase map from the sequence of the de-noised sinusoidal frames with phase shift,
- correlating (115) the wrapped phase map with the coding frame to obtain (116):

 - a pixel map with data comprising assigned period numbers, and
 - a map of probability values of assigning period numbers,

- filtering out (117) from the pixel map with data comprising assigned period number areas having on the map of probability values of assigning the period numbers a value $\leq 0.99$,
- reconstructing (118) the filtered out areas from the pixel map,
- generating (119) an unwrapped phase map from the wrapped phase map and the pixel map with reconstructed (118) filtered out areas,
- reconstructing (120) a 3D image of the spatial object based on the unwrapped phase map, wherein
- the coding fringe pattern (4b) comprises strips and the coding fringe pattern (4b) is arranged such that

 - the pixel width/height of the strips is equal to an oscillation period of a sinusoidal waveform of the sinusoidal frame,
 - every second strip comprises a fringe unit pattern,
 - each of the fringe unit patterns constitutes an area comprising at most the number of pixels corresponding to the number of pixels determining the pixel width/height of the strips,
- each of the fringe unit patterns occurs maximum of two times in the coding fringe pattern,
- each of the fringe unit pattern comprises at least one of three component RGB channels, wherein the brightness level of each of the component RGB channel is the same and is selected from 0%, 50%, 100%;

and wherein
- the sequence of de-noised sinusoidal frames with phase shift comprises a set of four de-noised frames comprising a sine signal, cosine signal, $\pi$-shifted sine signal, $\pi$-shifted cosine signal.

2. The method according to claim 1, wherein when reconstructing (120) of the 3D image of the spatial object (5) a coordinate value x of each reconstructed pixel is determined (120A) from the unwrapped phase map according to formula

$$x(\varphi) = \frac{p\varphi}{2\pi}$$

where

$\varphi$ - an angular value of each reconstructed pixel,
*p - an* oscillation period expressed in pixels,
in order to obtain (120B) a map of pixel coordinates,
wherein the 3D coordinates of the spatial object (5) are determined (120C) by compiling the unwrapped phase map with the map of pixel coordinates and taking into consideration relative location of at least one camera (3) and the projector (2).

3. The method according to claim 1 or 2, wherein after the step of capturing (104) by at least one camera (3) of the dynamic 3D scanner (1) at least one coding frame of the spatial object with the coding fringe pattern (4b) on its surface and before the step of generating (106) the sequence of the de-noised sinusoidal frames with phase shift, based on at least one captured (102) sinusoidal frame, the captured sinusoidal frame is divided (105) into square fragments, and the generation (106) of the sequence of the de-noised sinusoidal frames with phase shift, based on at least one captured (102) sinusoidal frame is performed by

- generating (106A) for each of said square fragments a sequence of de-noised sinusoidal square fragments with phase shift,
- cutting out (106B) overlapping edges of the de-noised sinusoidal square fragments with phase shift of said sequence,
- assembling (106C) of the de-noised sinusoidal square fragments with phase shift into the de-noised sinusoidal frame with phase shift.

4. The method according to any of the preceding claims, wherein after the step of generating (108) the wrapped phase map from the sequence of the de-noised sinusoidal frames with phase shift and before the step of correlating (115) the wrapped phase map with the coding frame,

- the spatial object in the wrapped phase map is divided (109) into longitudinal fragments,
- the spatial object in the coding frame is divided (110) into longitudinal fragments, and after obtaining (116) the pixel map with data comprising assigned period numbers and the map of probability values of assigning period numbers in a form of the longitudinal fragments,
- overlapping edges of the longitudinal fragments of the pixel map with data comprising assigned period numbers are cut out (111),
- overlapping edges of the longitudinal fragments of the map of probability values of assigning period numbers are cut out (112),
- the longitudinal fragments of the pixel map with data comprising assigned period numbers with the cut out overlapping edges are assembled (113) into the pixel map with data comprising assigned period numbers, and
- the longitudinal fragments of the map of probability values of assigning period numbers with the cut out overlapping edges are assembled (114) into the map of probability values of assigning period numbers.

5. The method according to any of the preceding claims, wherein the step of filtering out (117) from the pixel map with data comprising assigned period number areas having on the map of probability values of assigning the period numbers is performed for a value <= 0.95.

6. The method according to any of the preceding claims from 1 to 4, wherein the step of filtering out (117) from the pixel map with data comprising assigned period number areas having on the map of probability values of assigning the period numbers is performed for a value <= 0.90.

7. The method according to any of the preceding claims, wherein before generation (108) of the wrapped phase map from the sequence of the de-noised sinusoidal frames with phase shift, shadows are filtered out (107) from said sequence.

8. The method according to any of preceding claims, wherein the strips comprise the same fringe unit patterns located adjacently to each other.

9. The method according to any of the preceding claims, wherein the coding fringe pattern (4b) is a one-dimensional pattern.

10. The method according to any of the claims 1-7, wherein the coding fringe pattern (4b) is a two-dimensional pattern.

11. The method according to any of the preceding claims, wherein the wrapped phase map generation (108) is done by a first convolutional neural network.

12. The method according to any of the preceding claims, wherein the pixel map with data comprising assigned period numbers and the map of probability values of assigning period numbers obtaining (116) is done by a second convolutional neural network.

13. A dynamic 3D scanner (1) comprising:

    - a projector (2) for projecting (101) a sinusoidal fringe pattern (4a) and projecting (103) a coding fringe pattern (4b) onto a spatial object,
    - at least one camera (3) for capturing (102) at least one sinusoidal frame of the spatial object with the sinusoidal fringe pattern (4a) on its surface and for capturing (104) at least one coding frame of the spatial object with the coding fringe pattern (4b) on its surface,
    wherein the at least one camera (3) is pointed at a non-zero angle to a display direction of the projector (2),
    - the dynamic 3D scanner further comprising a processing unit, **characterized in that**
    - the processing unit is configured to performed the steps of the method according to any of the preceding claims 1-12.

14. A computer program comprising means of the program code for performing all steps of the method according to any of claims 1-12, when said program is running on the dynamic 3D scanner (1) according to claim 13.

15. A computer-readable medium storing computer-implemented instructions for performing all the steps of the method according to any of claims 1-12 implemented on the dynamic 3D scanner (1) according to claim 13.

**Patentansprüche**

1. Ein Verfahren zum dynamischen 3D-Scannen eines räumlichen Objekts, das die folgenden Schritte umfasst:

    - Projizieren (101) eines sinusförmigen Streifenmusters (4a) auf ein räumliches Objekt (5) durch einen Projektor (2) eines dynamischen 3D-Scanners (1),
    - Erfassen (102) mindestens eines sinusförmigen Rahmens des räumlichen Objekts (5) mit dem sinusförmigen Streifenmuster (4a) auf der Oberfläche durch mindestens eine Kamera (3) des dynamischen 3D-Scanners (1),
    - Projizieren (103) eines Codierungsstreifenmusters (4b) auf das räumliche Objekt (5) durch den Projektor (2) des dynamischen 3D-Scanners (1),
    - Erfassen (104) mindestens eines Codierrahmens des räumlichen Objekts (5) mit dem Codierungsstreifenmuster (4a) auf der Oberfläche durch mindestens eine Kamera (3) des dynamischen 3D-Scanners (1),
    - Erzeugen (106) einer Sequenz von entrauschten sinusförmigen Rahmen mit Phasenverschiebung auf der Grundlage mindestens eines erfassten (102) sinusförmigen Rahmens;

- Erzeugen (108) einer gewickelten Phasenabbildung aus der Sequenz der entrauschten sinusförmigen Rahmen mit Phasenverschiebung,

- Korrelieren (115) der gewickelten Phasenabbildung mit dem Codierrahmen, um Folgendes zu erhalten (116):

- eine Pixelabbildung mit Daten, die zugewiesene Periodennummern umfassen, und

- eine Abbildung von Wahrscheinlichkeitswerten der Zuweisung von Periodennummern,

- Herausfiltern (117) aus der Pixelabbildung mit Daten, die zugewiesene Periodenzahlbereiche umfassen, die auf der Abbildung der Wahrscheinlichkeitswerte der **Zuweisung der Periodenzahlen einen Wert von ≤ 0,99 aufweisen,**

- Rekonstruieren (118) der herausgefilterten Bereiche aus der Pixelabbildung,

- Erzeugen (119) einer nicht gewickelten Phasenabbildung aus der gewickelten Phasenabbildung und der Pixelabbildung mit rekonstruierten (118) herausgefilterten Bereichen,

- Rekonstruieren (120) eines 3D-Bildes des räumlichen Objekts auf der Grundlage der abgewickelten Phasenabbildung, wobei

- das Codierungsstreifenmuster (4b) Streifen umfasst und das Codierungsstreifenmuster (4b) so angeordnet ist, dass

- die Pixelbreite/-höhe der Streifen gleich einer Oszillationsperiode einer sinusförmigen Wellenform des sinusförmigen Rahmens ist,

- jeder zweite Streifen ein Streifeneinheitsmuster umfasst,

- jedes der Streifeneinheitsmuster einen Bereich bildet, der höchstens die Anzahl von Pixeln umfasst, die der Anzahl von Pixeln entspricht, die die Pixelbreite/-höhe der Streifen bestimmen,

- jedes der Streifeneinheitsmuster maximal zweimal im Codierungsstreifenmuster auftritt,

- jedes der Streifeneinheitsmuster mindestens einen von drei **RGB-Komponentenkanälen** umfasst, wobei der Helligkeitsgrad jedes der **RGB-Komponentenkanäle gleich ist und aus 0 %, 50 %, 100 % ausgewählt wird;** und wobei

- **die Sequenz von entrauschten sinusförmigen Rahmen mit Phasenverschiebung einen Satz** von vier entrauschten Rahmen umfasst, die ein Sinussignal, ein Kosinussignal, ein n-verschobenes Sinussignal und ein n-verschobenes Kosinussignal umfassen.

2. Das Verfahren nach Anspruch 1, wobei beim Rekonstruieren (120) des 3D-Bildes des räumlichen Objekts (5) ein Koordinatenwert x jedes rekonstruierten Pixels aus der abgewickelten Phasenabbildung gemäß der Formel bestimmt wird (120A)

$$x(\varphi) = \frac{p\varphi}{2\pi}$$

wobei

$\varphi$ - ein Winkelwert jedes rekonstruierten Pixels ist,

**p - eine Oszillationsperiode, ausgedrückt in Pixeln ist,**

um eine Abbildung von Pixelkoordinaten zu erhalten (120B),

wobei die 3D-Koordinaten des räumlichen Objekts (5) durch Kompilieren der abgewickelten Phasenabbildung mit der Abbildung von Pixelkoordinaten und Berücksichtigung der relativen Position von mindestens einer Kamera (3) und dem Projektor (2) bestimmt werden (120C).

3. Das Verfahren nach Anspruch 1 oder 2, wobei nach dem Schritt des Erfassens (104) von mindestens einer Kamera (3) des dynamischen 3D-Scanners (1) mindestens ein Codierrahmen des räumlichen Objekts mit dem Codierungsstreifenmuster (4b) auf seiner Oberfläche und vor dem Schritt des Erzeugens (106) der Sequenz der entrauschten sinusförmigen Rahmen mit Phasenverschiebung, basierend auf mindestens einem erfassten (102) sinusförmigen Rahmen, wird der erfasste sinusförmige Rahmen in quadratische Fragmente unterteilt (105), und die Erzeugung (106) der Sequenz der entrauschten sinusförmigen Rahmen mit Phasenverschiebung, basierend auf mindestens einem erfassten (102) sinusförmigen Rahmen, wird durchgeführt durch

- Erzeugen (106A) einer Sequenz von entrauschten sinusförmigen quadratischen Fragmenten mit Phasenverschiebung für jedes der quadratischen Fragmente,

- Ausschneiden (106B) überlappender Kanten der entrauschten sinusförmigen quadratischen Fragmente mit Phasenverschiebung der Sequenz,

- Zusammenfügen (106C) der entrauschten sinusförmigen Rechteckfragmente mit Phasenverschiebung in den entrauschten sinusförmigen Rahmen mit Phasenverschiebung.

4. Das Verfahren nach einem der vorstehenden Ansprüche, wobei nach dem Schritt des Erzeugens (108) der gewickelten Phasenabbildung aus der Sequenz der entrauschten sinusförmigen Rahmen mit Phasenverschiebung und vor dem Schritt des Korrelierens (115) der gewickelten Phasenabbildung mit dem Codierrahmen

- das räumliche Objekt in der gewickelten Phasenabbildung in Längsfragmente unterteilt (109) wird,
- das räumliche Objekt in dem Codierrahmen in Längsfragmente unterteilt (110) wird, und nachdem die Pixelabbildung mit Daten, die zugewiesene Periodennummern umfassen, und die Abbildung von Wahrscheinlichkeitswerten der Zuweisung von Periodennummern in Form der Längsfragmente erhalten wurden (116),
- **werden die überlappenden Ränder der Längsfragmente der Pixelabbildung mit Daten, die** zugewiesene Periodennummern umfassen, ausgeschnitten (111),
- **werden überlappende Ränder der Längsfragmente der Abbildung der** Wahrscheinlichkeitswerte der zugewiesenen Periodennummern ausgeschnitten (112),
- **werden die Längsfragmente der Pixelabbildung mit Daten, die zugewiesene Periodennummern umfassen, mit den ausgeschnittenen überlappenden Rändern zu der** Pixelabbildung mit Daten, die zugewiesene Periodennummern umfassen, zusammengesetzt (113), und
- werden die Längsfragmente der Abbildung der Wahrscheinlichkeitswerte der zugewiesenen Periodennummern mit den ausgeschnittenen überlappenden Rändern in die Abbildung der Wahrscheinlichkeitswerte der zugewiesenen Periodennummern zusammengesetzt (114).

5. Das Verfahren nach einem der vorhergehenden Ansprüche, wobei der Schritt des Herausfilterns (117) aus der Pixelabbildung mit Daten, die zugewiesene Periodenzahlbereiche umfasst, die auf der Abbildung der Wahrscheinlichkeitswerte der Zuweisung der Periodenzahlen für einen Wert von <= 0,95 ausgeführt wird.

6. Das Verfahren nach einem der vorstehenden Ansprüche 1 bis 4, wobei der Schritt des Herausfilterns (117) aus der Pixelabbildung mit Daten, die zugewiesene Periodenzahlbereiche umfasst, die auf der Abbildung der Wahrscheinlichkeitswerte der Zuweisung der Periodenzahlen für einen Wert von <= 0,90 ausgeführt wird.

7. Das Verfahren nach einem der vorhergehenden Ansprüche, wobei vor der Erzeugung (108) der gewickelten Phasenabbildung aus der Sequenz der entrauschten sinusförmigen Rahmen mit Phasenverschiebung Schatten aus der Sequenz herausgefiltert (107) werden.

8. Das Verfahren nach einem der vorhergehenden Ansprüche, wobei die Streifen die gleichen Streifeneinheitsmuster umfassen, die nebeneinander angeordnet sind.

9. Das Verfahren nach einem der vorhergehenden Ansprüche, wobei das Codierungsstreifenmuster (4b) ein eindimensionales Muster ist.

10. Das Verfahren nach einem der Ansprüche 1 bis 7, wobei das Codierungsstreifenmuster (4b) ein zweidimensionales Muster ist.

11. Das Verfahren nach einem der vorhergehenden Ansprüche, wobei die Erzeugung der gewickelten Phasenabbildung (108) durch ein erstes neuronales Faltungsnetzwerk erfolgt.

12. Das Verfahren nach einem der vorhergehenden Ansprüche, wobei die Pixelabbildung mit Daten, die zugewiesene Periodennummern umfassen, und die Abbildung der Wahrscheinlichkeitswerte der Zuweisung von Periodennummern (116) durch ein zweites neuronales Faltungsnetzwerk erfolgt.

13. Ein dynamischer 3D-Scanner (1) mit:

- einem Projektor (2) zum Projizieren (101) eines sinusförmigen Streifenmusters (4a) und zum Projizieren (103) eines Codierungsstreifenmusters (4b) auf ein räumliches Objekt,
- mindestens einer Kamera (3) zum Erfassen (102) mindestens eines sinusförmigen Rahmens des räumlichen Objekts mit dem sinusförmigen Streifenmuster (4a) auf seiner Oberfläche und zum Erfassen (104) mindestens eines Codierungsrahmens des räumlichen Objekts mit dem Codierstreifenmuster (4b) auf seiner Oberfläche,

wobei die mindestens eine Kamera (3) in einem von Null verschiedenen Winkel zu einer Anzeigerichtung des Projektors (2) ausgerichtet ist,
- wobei der dynamische 3D-Scanner ferner eine Verarbeitungseinheit umfasst,
**dadurch gekennzeichnet, dass**
- die Verarbeitungseinheit so konfiguriert ist, dass sie die Schritte des Verfahrens gemäß einem der vorhergehenden Ansprüche 1-12 ausführt.

14. Ein Computerprogramm, das Mittel des Programmcodes zum Ausführen aller Schritte des Verfahrens gemäß einem der Ansprüche 1-12 umfasst, wenn das Programm auf dem dynamischen 3D-Scanner (1) gemäß Anspruch 13 läuft.

15. Ein computerlesbares Medium, das computerimplementierte Anweisungen zum Ausführen aller Schritte des Verfahrens gemäß einem der Ansprüche 1-12 speichert, das auf dem dynamischen 3D-Scanner (1) gemäß Anspruch 13 implementiert ist.

**Revendications**

1. Un procédé de balayage 3D dynamique d'un objet spatial comprenant les étapes suivantes :

- projection (101) d'un motif de frange sinusoïdal (4a) sur un objet spatial (5) par un projecteur (2) d'un scanner 3D dynamique (1),
- capture (102) par au moins une caméra (3) du scanner 3D dynamique (1) d'au moins une trame sinusoïdale de l'objet spatial (5) avec le motif de frange sinusoïdal (4a) sur la surface,
- projection (103) d'un motif de frange de codage (4b) sur l'objet spatial (5) par le projecteur (2) du scanner 3D dynamique (1),
- **capture (104) par au moins une caméra (3) du scanner 3D dynamique (1) d'au moins une** trame de codage de l'objet spatial (5) avec le motif de frange de codage (4b) sur sa surface,
- **génération (106) d'une séquence de trames sinusoïdales débruitées avec décalage de phase, sur la base d'au moins une trame sinusoïdale capturée (102) ;**
- **génération (108) d'une carte de phase enveloppée à partir de la séquence des trames sinusoïdales débruitées avec décalage de phase,**
- **corrélation (115) de la carte de phase enveloppée avec la trame de codage pour obtenir** (116) :
- une carte de pixels avec des données comprenant des numéros de période attribués et
- une carte des valeurs de probabilité d'attribution des numéros de période,
- filtrage (117) de la carte des pixels avec des données comprenant des zones de numéros de période attribués ayant sur la carte des valeurs de probabilité d'attribution des numéros de période une valeur $\leq 0,99$,
- reconstruction (118) des zones filtrées à partir de la carte des pixels,
- génération (119) d'une carte de phase non enveloppée à partir de la carte de phase enveloppée et de la carte de pixels avec les zones filtrées reconstruites (118),
- reconstruction (120) d'une image 3D de l'objet spatial sur la base de la carte de phase non enveloppée, dans laquelle
- le motif de frange de codage (4b) comprend des bandes et le motif de frange de codage (4b) est disposé de telle sorte que
- la largeur/hauteur des pixels des bandes est égale à une période d'oscillation d'une forme d'onde sinusoïdale de la trame sinusoïdale,
- chaque deuxième bande comprend un motif d'unité de frange,
- chacun des motifs d'unité de frange constitue une zone comprenant au maximum le nombre de pixels correspondant au nombre de pixels déterminant la largeur/hauteur des bandes,
- chacun des motifs d'unité de frange apparaît au maximum deux fois dans le motif de frange de codage,
- chacun des motifs d'unité de frange comprend au moins un des trois canaux RVB constitutifs, le niveau de luminosité de chacun des canaux RVB constitutifs étant le même et étant choisi entre 0 %, 50 % et 100 % ; et dans lequel
- la séquence de trames sinusoïdales débruitées avec décalage de phase comprend un ensemble de quatre trames débruitées comprenant un signal sinusoïdal, un signal cosinusoïdal, un signal sinusoïdal n-décalé, un signal cosinusoïdal n-décalé.

2. Le procédé selon la revendication 1, dans lequel lors de la reconstruction (120) de l'image 3D de l'objet spatial (5), une valeur de coordonnée x de chaque pixel reconstruit est déterminée (120A) à partir de la carte de phase non enveloppée selon la formule suivante

$$x(\varphi) = \frac{p\varphi}{2\pi}$$

où

$\varphi$ - une valeur angulaire de chaque pixel reconstruit,
$p$ - une période d'oscillation exprimée en pixels,
afin d'obtenir (120B) une carte de coordonnées de pixels,
dans lequel les coordonnées 3D de l'objet spatial (5) sont déterminées (120C) en compilant la carte de phase non enveloppée avec la carte de coordonnées de pixels et en tenant compte de l'emplacement relatif d'au moins une caméra (3) et du projecteur (2).

3. Le procédé selon la revendication 1 ou 2, dans lequel après l'étape de capture (104) par au moins une caméra (3) du scanner 3D dynamique (1) d'au moins une trame de codage de l'objet spatial avec le motif de frange de codage (4b) sur sa surface et avant l'étape de génération (106) de la séquence des trames sinusoïdales débruitées avec décalage de phase, sur la base d'au moins une trame sinusoïdale capturée (102), la trame sinusoïdale capturée est divisée (105) en fragments carrés, et la génération (106) de la séquence des trames sinusoïdales débruitées avec décalage de phase, sur la base d'au moins une trame sinusoïdale capturée (102), est effectuée par

- génération (106A) pour chacun desdits fragments carrés d'une séquence de fragments carrés sinusoïdaux débruités avec décalage de phase,
- découpage (106B) des bords superposés des fragments carrés sinusoïdaux débruités avec décalage de phase de ladite séquence,
- assemblage (106C) des fragments carrés sinusoïdaux débruités avec décalage de phase dans la trame sinusoïdale débruitée avec décalage de phase.

4. Le procédé selon l'une des revendications précédentes, dans lequel après l'étape de génération (108) de la carte de phase enveloppée à partir de la séquence des trames sinusoïdales débruitées avec décalage de phase et avant l'étape de corrélation (115) de la carte de phase enveloppée avec la trame de codage,

- l'objet spatial dans la carte de phase enveloppée est divisé (109) en fragments longitudinaux,
- l'objet spatial dans la trame de codage est divisé (110) en fragments longitudinaux, et après avoir obtenu (116) la carte de pixels avec des données comprenant des numéros de période attribués et la carte des valeurs de probabilité d'attribution de numéros de période sous la forme de fragments longitudinaux,
- les bords superposés des fragments longitudinaux de la carte de pixels avec des données comprenant des numéros de période attribués sont découpés (111),
- les bords superposés des fragments longitudinaux de la carte des valeurs de probabilité d'attribution des numéros de période sont découpés (112),
- les fragments longitudinaux de la carte de pixels avec des données comprenant des numéros de période attribués, dont les bords superposés sont découpés, sont assemblés (113) dans la carte de pixels avec des données comprenant des numéros de période attribués, et
- les fragments longitudinaux de la carte des valeurs de probabilité d'attribution des numéros de période, dont les bords superposés sont découpés, sont assemblés (114) dans la carte des valeurs de probabilité d'attribution des numéros de période.

5. Le procédé selon l'une des revendications précédentes, dans lequel l'étape de filtrage (117) de la carte de pixels avec des données comprenant des zones de numéros de période attribués ayant sur la carte des valeurs de probabilité d'attribution des numéros de période est effectuée pour une valeur <= 0,95.

6. Le procédé selon l'une des revendications précédentes de 1 à 4, dans lequel l'étape de filtrage (117) de la carte de pixels avec des données comprenant des zones de numéros de période attribués ayant sur la carte des valeurs de probabilité d'attribution des numéros de période est effectuée pour une valeur <= 0,90.

7. Le procédé selon l'une des revendications précédentes, dans lequel avant la génération (108) de la carte de phase enveloppée à partir de la séquence des trames sinusoïdales débruitées avec décalage de phase, les ombres sont filtrées (107) de ladite séquence.

8. Le procédé selon l'une des revendications précédentes, dans lequel les bandes comprennent les mêmes motifs d'unité de frange situés de manière adjacente les uns aux autres.

9. Le procédé selon l'une des revendications précédentes, dans lequel le motif de frange de codage (4b) est un motif unidimensionnel.

10. Le procédé selon l'une des revendications 1 à 7, dans lequel le motif de frange de codage (4b) est un motif bidimensionnel.

11. Le procédé selon l'une des revendications précédentes, dans lequel la génération de la carte de phase enveloppée (108) est effectuée par un premier réseau neuronal convolutionnel.

12. Le procédé selon l'une des revendications précédentes, dans lequel l'obtention (116) de la carte de pixels avec des données comprenant des numéros de période attribués et la carte de valeurs de probabilité d'attribution de numéros de période est effectuée par un deuxième réseau neuronal convolutionnel.

13. Un scanner 3D dynamique (1) comprenant :

   - un projecteur (2) pour projeter (101) un motif de frange sinusoïdal (4a) et projeter (103) un motif de frange de codage (4b) sur un objet spatial,
   - au moins une caméra (3) pour capturer (102) au moins une image sinusoïdale de l'objet spatial avec le motif de frange sinusoïdale (4a) sur sa surface et pour capturer (104) au moins une trame de codage de l'objet spatial avec le motif de frange de codage (4b) sur sa surface,
   dans lequel l'au moins une caméra (3) est orientée à un angle non nul par rapport à la direction d'affichage du projecteur (2),
   - le scanner 3D dynamique comprenant en outre une unité de traitement,
   **caractérisé en ce que**
   - l'unité de traitement est configurée pour exécuter les étapes du procédé selon l'une des revendications précédentes 1-12.

14. Un programme informatique comprenant des moyens du code de programme pour exécuter toutes les étapes du procédé selon l'une des revendications 1 à 12, lorsque ledit programme est exécuté sur le scanner 3D dynamique (1) selon la revendication 13.

15. Un support lisible par ordinateur stockant des instructions mises en œuvre par ordinateur pour exécuter toutes les étapes du procédé selon l'une des revendications 1 à 12, mises en œuvre sur le scanner 3D dynamique (1) selon la revendication 13.

Fig. 1

106

107

108

109

Filtering out shadows from said sequence

Dividing the spatial object in the wrapped phase map into longitudinal fragments

106A

110

Generating for each of said square fragments a sequence of de-noised sinusoidal square fragments with phase shift

Dividing the spatial object in the coding frame into longitudinal fragments

106B

111

Cutting out overlapping edges of the de-noised sinusoidal square fragments with phase shift of said sequence

Cutting out overlapping edges of the longitudinal fragments of the pixel map with data comprising assigned period numbers

106C

112

Assembling of the de-noised sinusoidal square fragments with phase shift into the de-noised sinusoidal frames with phase shifte

Cutting out overlapping edges of the longitudinal fragments of the map of probability values of assigning period numbers

108

113

Assembling the longitudinal fragments of the map of probability values of assigning period numbers with the cut out overlapping edges into the map of probability values of assigning period numbers

114

Assembling the longitudinal fragments of the pixel map with data comprising assigned period numbers with the cut out overlapping edges into the pixel map with data comprising assigned period numbers

**Fig. 1**

115,116

**119**

**120**

Reconstructing a 3D image
of the spatial object
based on
the unwrapped phase map

**120A**

Determining a coordinate value
($x$) of each reconstructed pixel
from the unwrapped phase
map according to formula

$$x(\varphi) = \frac{p\varphi}{2\pi}$$

where

$\varphi$ - angular value of each
reconstructed pixel

$p$ - oscillation period
expressed in pixels

**120B**

Obtaining a map of
pixel coordinates

**120C**

Determining
the 3D coordinates

# Fig. 1

**Fig. 2**

**Fig. 3**

**Fig. 4**

**Fig. 5A**

Fig. 5B

Fig. 6

Fig. 7

Fig. 8

Fig. 9

**Fig. 10A**

**Fig. 10B**

**Fig. 11**

**Fig. 12**

**Fig. 13**

**Fig. 14A**

**Fig. 14D**

**Fig. 14B**

**Fig. 14C**

**Fig. 15A**

**Fig. 15D**

**Fig. 15B**

**Fig. 15C**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 111383234 B
- WO 2020102814 A1
- WO 2020063013 A1
- CN 111523618 A

**Non-patent literature cited in the description**

- **PENGCHENG YAO** ; **SHAOYAN GAI** ; **YUCHONG CHEN** ; **WENLONG CHEN** ; **FEIPENG DA**. A multi-code 3D measurement technique based on deep learning. *Optics and Lasers in Engineering*, August 2021, vol. 143, 106623

- **MICHIKA MARUYAMA et al.** Multi-pattern Embedded Phase Shifting Using a High-Speed Projector for Fast and Accurate Dynamic 3D Measurement. *2018 IEEE Winter Conference on Applications of Computer Vision (WACV)*